# EUROPÄISCHE PATENTSCHRIFT

(11) **EP 0 718 941 B1**
(45) Veröffentlichungstag und Bekanntmachung des Hinweises auf die Patenterteilung: **20.01.1999**
(21) Anmeldenummer: 95120114.4
(22) Anmeldetag: 19.12.1995
(51) Int. Cl.: H02B 13/035, H02B 13/065

(54) **Elektrische metallgekapselte gasisolierte Hochspannungsschaltanlage**
Electrical metal clad gas-insulated high voltage installation
Installation électrique blindée à haute tension

(30) Priorität: 22.12.1994 DE 4445865
(43) Veröffentlichungstag der Anmeldung: 26.06.1996
(73) Patentinhaber: ABB PATENT GmbH, 68309 Mannheim (DE)
(72) Erfinder: Müller, Ottmar, D-12459 Berlin (DE); Paulsson, Anders, D-63755 Alzenau (DE); Rees, Volker, D-64289 Darmstadt (DE)
(74) Vertreter: Rupprecht, Klaus, Dipl.-Ing.

(56) Entgegenhaltungen:
- EP-A- 0 291 762
- EP-A- 0 433 183
- EP-A- 0 545 508
- DE-A- 2 165 283
- DE-A- 2 210 626
- DE-A- 2 635 702
- DE-A- 3 334 682
- DE-A- 4 107 673
- FR-A- 2 418 559

## Beschreibung

Die Erfindung betrifft eine elektrische, metallgekapselte gasisolierte Hochspannungsschaltanlage gemäß dem Oberbegriff des Anspruches 1 (vgl. DE-A-26 35 702).

Gasisolierte Hochspannungsschaltanlagen werden im gesamten Hochspannungsbereich von 6 kV bis 800 kV gebaut. Als Isoliermedium wurde und wird vorzugsweise das Schwergas SF₆ oder zum Teil Luft bei Normaldruck bzw. Überdruck verwendet. Die Verwendung von Gas bei Normaldruck erlaubt - bedingt durch den Isolationswert der Gase - die Verwendung von schrankartigen Behältern, d. h. dünnwandigen Behältern mit ebenen Flächen. Dann sind bei Wahrung einer kostengünstigen Lösung nur gekapselte Baueinheiten bis 36 kV realisierbar; bei Verwendung von SF₆ ist eine qualitätsgerechte SF₆-Gasfüllung nicht ohne weiteres möglich, da die ebenen Flächen eine Absaugung der Luft und damit die Erreichung eines entsprechend geringen Feuchtegehalts über Vakuumpumpen nicht zulassen.

Die einzelnen Komponenten einer Standardschaltanlagenbaueinheit, Kabeleingangsteil mit Strom- und Spannungswandler, Leistungsschalter und Sammelschienen mit Dreistellungstrenner sind technologisch und funktionsbedingt in der Regel in drei Abteilen bzw. separaten Teilräumen untergebracht; die vielfach gewählten Trennwände stellen keine Gastrennung dar, so daß eine Baueinheit stets auch einen einzigen Gasraum enthält. Die Volumina dieser Baueinheiten in Schrankbauform betragen ca. 1 m³ bis 3 m³. Im Falle eines inneren Störlichtbogens in diesen Baueinheiten beträgt der Überdruck nach ca. 100 ms Lichtbogenbrenndauer infolge der sehr großen Volumina bei Kurzschlußströmen bis 31,5 kA nur ca. 10 kPa. Diese durch den Überdruck verursachte dynamische Belastung der Kapselung wird im allgemeinen auch von einer kostengünstigen dünnwandigen Konstruktion beherrscht.

Für Hochspannungsschaltanlagen mit einer Spannungshöhe > 72 kV werden für die Kapselung relativ dickwandige Bleche aus Aluminium oder Stahl verwendet, die ausnahmslos zylinderförmig mit T- und X-Teilen gestaltet sind. Diese zylinderförmigen Gefäße oder Gehäuse werden für Betriebsdrücke von ca. 0,6 MPa (Ü) ausgelegt, womit die wachsende Isolierfestigkeit der Gase bei höherem Gasdruck ausgenutzt werden kann. Die Druckbelastung von 0,1 NPa durch Vakuumpumpen für die fremdgasfreie und feuchtefreie SF₆-Gasfüllung ist möglich und stellt damit keine zusätzliche Forderung dar. Die einzelnen Anlagekomponenten wie Leistungsschalter, Kabeleingangsteil, Sammelschienengehäuse mit Trenner haben ihre separaten zylinderförmigen Behälter, deren Gasräume mittels Schottisolatoren voneinander getrennt sind und in der Regel unabhängig voneinander überwacht werden. Die Gasräume habe Volumina von 0,1 m³ bis 1 m³, bei dreiphasiger Kapselung sind die höheren Werte gegeben.

Bei einem inneren Lichtbogenfehler entsteht auch hier ein Gasüberdruck, der den Betriebsdruck erhöht, so daß bei ca. 100 ms Brenndauer und Strömen von 31,5 kA und darüber in den kleineren Behältern Drücke von ca. 1,0 MPa bis 1,5 MPa auftreten können. Die Behälter werden deshalb entsprechend zu bemessen sein bzw. durch geeignete Mittel geschützt. Gemäß den geltenden Vorschriften sind die Behälter druckfest zu bemessen, was zu relativ hohen Kosten führt.

Die Beherrschung der hohen Betriebsspannungen > 123 kV bei relativ kleinen handhabbaren Behältern zur Erzielung geringer Außenabmessungen erzwingt die volle Ausschöpfung der Isolationsfestigkeit bei hohem Druck von ca. 0,3 MPa bis 0,6 MPa.

Für das Spannungsgebiet von 46 kV bis 90 kV ist die dickwandige Behälterkonstruktion der Hochspannungsschalter bzw. Schaltanlagen über 123 kV aus Kostengründen völlig überdimensioniert. Die dünnwandige Schrankbauform der Mittelspannungstechnik weist erhebliche technische Mängel auf; die SF₆-Füllung ist ohne Sondermaßnahmen nur nach dem Luftverdrängungsprinzip möglich, weswegen eine reine SF₆-Atmosphäre mit einem extrem niedrigen Feuchtegehalt nicht immer erreichbar ist.

Aufgabe der Erfindung ist es daher, vorzugsweise für das Spannungsgebiet 45 kV bis 90 (123) kV eine Form der Kapselung für eine komplette Anlagenbaueinheit (Schaltfeld) zu finden, die die ökonomischen Nachteile der Hochspannungstechnik (Spannungsebenen > 123 kV) und die technischen Grenzen der Schrankbauform in der Mittelspannungstechnik (< 36 (72) kV) beseitigt.

Diese Aufgabe wird erfindungsgemäß gelöst durch die kennzeichnenden Merkmale des Anspruches 1.

Weitere vorteilhafte Ausgestaltungen der Erfindung sind den weiteren Unteransprüchen zu entnehmen.

Die Behälter für die Komponenten Leistungsschalter, Kabelanschlußteil und Sammelschienenteil sind zylinderförmig ausgebildet, und deren Wände bestehen aus leicht verformbarem, vorzugsweise unmagnetischem Dünnblech, mit einer Blechstärke ≦ 2 mm. Diese Behälter sind miteinander derart zusammengefügt, daß ein kontinuierlicher Gasdurchfluß zwischen den einzelnen Komponenten gewährleistet ist, so daß auch im Störungsfall bei einem inneren Lichtbogen das Gesamtvolumen einer Baueinheit gemäß obiger Gleichung den Druckanstieg bestimmt. Der Druckanstieg beträgt somit bei einem Gasvolumen von 1,5 m³ (etwa Standardbaueinheit) nur ca. 0,01 MPA pro 100 ms, so daß dieser Druckanstieg praktisch keinen Einfluß auf die Festigkeit der Behälter hat.

Der freie Gasdurchgang ohne nennenswerten Druckanstieg ist gewährleistet, wenn der Querschnitt > 100 cm² beträgt, wobei dieser Gesamtquerschnitt auf zwei bis vier Teilquerschnitte unterteilt sein kann.

Die Zylinderform der Behälter auch bei Dünnblech gewährleistet eine Mindestdruckfestigkeit von 0,25 MPa Überdruck bzw. 0,1 MPa Unterdruck, so daß eine qualitätsgerechte Gasfüllung möglich wird und ein Betriebsdruck von ca. 0,05 MPa (Überdruck) gewählt werden kann. Dieser Betriebsdruck gewährleistet zugleich, daß sowohl die Werksendprüfung als auch der Transport vom Werk zur Baustelle und die Inbetriebnahme einfach möglich werden.

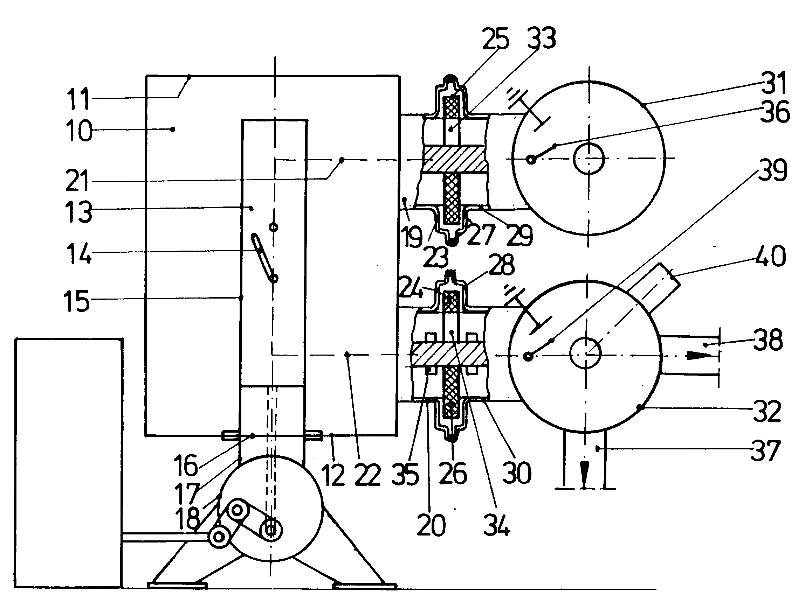

Anhand der Zeichnung, in der ein Ausführungsbeispiel der Erfindung dargestellt ist, sollen die Erfindung sowie weitere vorteilhafte Ausgestaltungen und Verbesserungen der Erfindung näher erläutert und beschrieben werden.
Es zeigt die einzige Figur eine Seitenansicht einer erfindungsgemäßen Schaltanlage.

Innerhalb eines dünnwandigen zylindrischen Gehäuses 10, welches an seinen Stirnseiten mit je einem Deckel 11 und 12 abgeschlossen ist, befinden sich eine der Anzahl der Phasen eines Hochspannungsnetzes entsprechende Anzahl von Leistungsschalterpolen 13, deren Schaltstrecken 14 je in einer Schaltkammer 15 untergebracht sind, welche an dem unteren Deckel 12 angebracht ist. Der untere Deckel 12 besitzt dabei eine Ausnehmung 16, an dessen Außenseite ein Stutzen 17 eines Kurbelgehäuses 18 angeschlossen ist, so daß das Kurbelgehäuse 18 über den Stutzen 17 bzw. die Stutzen 17 nur mit dem Innenraum der Schaltkammer 15 für jede Phase verbunden ist, so daß der Raum innerhalb der Schaltkammer 15 und des Kurbelgehäuses 18 ein einziges Gasvolumen darstellen. Das Gasvolumen-, welches sich in dem Gehäuse 10 außerhalb der Schaltkammer 15 befindet, ist mit dem Kurbelgehäuse 18 nicht verbunden.

An dem zylinderförmigen Gehäuse sind jeweils senkrecht dazu verlaufende Stutzen 19 und 20 vorgesehen, die in Abstand zueinander angeordnet sind und die zur Durchführung der Zu- und Abgangsleiter 21 und 22 zu den zugehörigen Leistungsschalterpolen 13 dienen.

An den Endflanschen 23 und 24 der Stutzen 19 und 20 ist jeweils ein Isolator 25 und 26 befestigt, an dem wiederum der Flansch 27 und 28 eines Stutzens 29 und 30 angeschlossen sind, welche Teil eines Sammelschienenbehälters 31 bzw. eines Kabelabgangsbehälters 32 sind. Die Isolatoren 25 und 26 besitzen Öffnungen 33 und 34, durch die ein Gasaustausch zwischen dem Innenraum des Gehäues 10 und den Gehäusen 31 und 32 ermöglicht ist. Beidseitig zu dem Isolator 26 kann die Leitung 22 mit einem Stromwandler 35 versehen bzw. umgeben sein, wie dargestellt.

Die Wandstärke des Gehäuses 10 sowie der Gehäuse 31 und 32 sind dünnwandig, besitzen somit eine Wandstärke von ca. 2 mm.

Am Sammelschienengehäuse bzw. in dem Sammelschienengehäuse 31 befindet sich ein Trenn- und Erdungsschalter 36; an dem Kabelabgangsgehäuse 32 sind zwei Kabelabgangsstutzen 37 und 38, innerhalb des Gehäuses 32 wieder ein Trenn-Erdungsschalter 39 und ein Spannungsmeßanschluß 40 vorgesehen.

## Patentansprüche

1. Metallgekapselte, gasisolierte, elektrische Mittel- oder Hochspannungsschaltanlage mit einem jeder Phase zugeordneten Leistungsschalterpol (13), mit einem Kabelzu- und -abgang (37), mit wenigstens einer Sammelschienenanordnung (31) und mit weiteren Komponenten, wobei die weiteren Anlagenkomponenten Leistungsschalter (13), Sammelschienen, Kabeleingang (37) und dgl. in separaten zylinderförmigen Behältern integriert und als getrennte Baugruppen gestaltet sind, oder zusammen einen einheitlichen Gasraum bilden, dadurch gekennzeichnet, daß daß die Schaltstrecke (14) der Leistungsschalterpole (13) innerhalb einer mit Isoliergas gefüllten Schaltkammer (15) angeordnet sind, die selbst wiederum in einem ebenfalls mit Isoliergas gefüllten Behälter (10) aus dünnwandigem Material angeordnet sind, daß den Leistungsschalterpolen (13) ein außerhalb des Behälters (10) befindliches Kurbelgehäuse (18) zugeordnet ist, in dem sich die Antriebskurbeln für jeden Leistungsschalterpol (13) befinden, und daß lediglich die Schaltkammer (15) der Leistungsschalterpole (13) mit dem Innenraum des Kurbelgehäuses (18), einen Gasaustausch zwischen der Schaltkammer (15) der Leistungsschalterpole (13) und dem Innenraum des Kurbelgehäuses (18) gestattend verbunden sind.

2. Schaltanlage nach Anspruch 1, dadurch gekennzeichnet, daß an einer Seite des Behälters (10) Ausgänge (19,20) zu einem die Sammelschienenanordnung aufnehmenden Sammelschienengehäuse (31) und einem Kabelabgangsgehäuse (32) angeordnet sind.

3. Schaltanlage nach Anspruch 1, dadurch gekennzeichnet, daß der Innenraum des Behälters (10) und der Innenraum des Sammelschienengehäuses (31) und des Kabelabgangsgehäuses (32) jeweils einen Gasaustausch gestattend miteinander verbunden sind.

4. Schaltanlage nach Anspruch 3, dadurch gekennzeichnet, daß die Ausgänge (19,20) als Rohrstutzen ausgebildet sind, die durch Trennisolatorscheiben (25,26) abgeschottet sind, und daß das Sammelschienengehäuse (31) und das Kabelabgangsgehäuse (32) and den Trennisolatorscheiben (25,26) anschließen, wobei die Trennisolatorscheiben (25,26) Durchlässe (33,34) aufweisen, durch die der Gasaustausch gewährleistet ist.

5. Schaltanlage nach einem der vorherigen Ansprüche, dadurch gekennzeichnet, daß die Gehäuse zur Aufnahme der Leistungsschalterpole (13) und der Sammelschienenanordnung und des Kabelabganggehäuses zylinderförmig ausgebildet sind, wobei die Mittelachse des Sammelschienengehäuses (31) und die Mittelachse des Kabelabgangsgehäuses (32) parallel zueinander und senkrecht zu der Mittelachse des Gehäuses (10) für die Leistungsschalterpole (13) angeordnet sind.

6. Schaltanlage nach einem der vorherigen Ansprüche, dadurch gekennzeichnet, daß die Wandstärke ≦ 2 mm beträgt.

7. Schaltanlage nach einem der vorherigen Ansprüche, dadurch gekennzeichnet, daß die Durchlässe (33,34) an jeder Trennisolatorscheibe (25,26) einen Durchlaßquerschnitt aufweisen, der > 100 cm² beträgt.

## Claims

1. Metal-enclosed gas-filled electric medium-voltage or high-voltage switchgear unit having a power circuit-breaker pole (13) assigned to each phase, having an incoming cable and an outgoing cable (37), having at least one busbar arrangement (31) and having further components, the further unit components of power circuit-breaker (13), busbars, incoming cable (37) and the like being integrated into separate cylindrical containers and configured as separate subassemblies, or together forming a unitary gas space, characterized in that the braker gaps [sic] (14) of the power circuit-breaker poles (13) are arranged within an interrupter chamber (15) filled with insulating gas, which chamber itself in turn are [sic] arranged in a container (10) made from thin-walled material and likewise filled with insulating gas, in that the power circuit-breaker poles (13) are assigned a crankcase (18) which is located outside the container (10) and in which the drive cranks for each circuit-breaker pole (13) are located, and in that only the interrupter chambers (15) of the power circuit-breaker poles (13) are connected to the interior of the crankcase (18), in a manner permitting an exchange of gas between the interrupter chambers (15) of the power circuit-breaker poles (13) and the interior of the crankcase (18).

2. Switchgear unit according to Claim 1, characterized in that there are arranged at one end of the container (10) outlets (14, 20) to a busbar housing (31), accommodating the busbar arrangement, and to an outgoing cable housing (32).

3. Switchgear unit according to Claim 1, characterized in that the interior of the container (10) and the interior of the busbar housing (31) and of the outgoing cable housing (32) are connected to one another, in a manner respectively permitting an exchange of gas.

4. Switchgear unit according to Claim 3, characterized in that the outlets (14, 20) are constructed as tubular connecting pieces which are partitioned off by disconnecting insulator discs (25, 26), and in that the busbar housing (31) and the outgoing cable housing (32) are adjacent to the disconnecting insulator discs (25, 26), the disconnecting insulator discs (25, 26) having passages (33, 34) through which the exchange of gas is ensured.

5. Switchgear unit according to one of the preceding claims, characterized in that for the purpose of accommodating the power circuit-breaker poles (13) and the busbar arrangement and the outgoing cable housing, the housings are of cylindrical design, the central axis of the busbar housing (31) and the central axis of the outgoing cable housing (32) being arranged parallel to one another and at right angles to the central axis of the housing (10) for the power circuit-breaker poles (13).

6. Switchgear unit according to one of the preceding claims, characterized in that the wall thickness amounts to ≤ 2 mm.

7. Switchgear unit according to one of the preceding claims, characterized in that the passages (33, 34) in each disconnecting insulator disc (25, 26) have a passage cross-section which amounts to > 100 cm².

## Revendications

1. Installation électrique de commutation à moyenne ou haute tension sous enveloppe métallique et à isolement dans un gaz comprenant un pôle de disjoncteur de puissance (13) associé à chacune des phases, une arrivée et un départ de câbles (37), au moins un agencement de barres omnibus (31) et d'autres composants, les composants de l'installation comprenant les disjoncteurs de puissance (13), les barres omnibus, l'arrivée de câbles (37) et des composants analogues étant intégrés dans des enveloppes cylindriques séparées et réalisés sous forme de groupes fonctionnels séparés, ou constituant ensemble un volume de gaz unitaire, caractérisée par le fait que les trajets de coupure (14) des pôles de disjoncteurs de puissance (13) sont disposés à l'intérieur d'une chambre de coupure (15) qui est remplie à l'aide d'un gaz isolant et qui est à son tour disposée à l'intérieur d'une enceinte (10) en matériau de faible épaisseur de paroi, également remplie de gaz isolant, qu'aux pôles de disjoncteurs de puissance (13) est associé un carter de manivelles (18) qui se trouve à l'extérieur de l'enceinte (10) et dans laquelle se trouvent les manivelles d'entraînement pour chaque pôle de disjoncteur de puissance (13), et que seules les chambres de coupure (15) des pôles de disjoncteurs de puissance (13) sont reliées à l'espace intérieur du carter de manivelles (18), de manière à permettre un échange de gaz entre les chambres de coupure (15) des pôles de disjoncteurs de puissance (13) et l'espace intérieur du carter de manivelles (18).

2. Installation suivant la revendication 1, caractérisée par le fait que sur un côté de l'enceinte (10) sont disposées des sorties (19, 20) vers une enveloppe de barres omnibus (31) recevant l'agencement de barres omnibus et une enveloppe de départ de câbles (32).

3. Installation suivant la revendication 1, caractérisée par le fait que l'espace intérieur de l'enceinte (10) et l'espace intérieur de l'enveloppe de barres omnibus (31) et de l'enveloppe de départ de câbles (32) sont reliés respectivement entre eux de manière à permettre un échange de gaz.

4. Installation suivant la revendication 2, caractérisée par le fait que les sorties (19, 20) sont réalisées sous forme de tubulures cloisonnées par des disques-isolateurs (25, 26), et que l'enveloppe de barres omnibus (31) et l'enveloppe de départ de câbles (32) se raccordent aux disques-isolateurs (25, 26), les disques-isolateurs (25, 26) présentant des passages (33, 34) assurant l'échange de gaz.

5. Installation suivant l'une des revendications précédentes, caractérisée par le fait que les enveloppes recevant les pôles de disjoncteurs de puissance (13) et l'agencement de barres omnibus et l'enveloppe de départ de câbles sont de forme cylindrique, l'axe de l'enveloppe de barres omnibus (31) et l'axe de l'enveloppe de départ de câbles (32) étant parallèles l'un à l'autre et perpendiculaire à l'axe de l'enceinte (10) pour les pôles de disjoncteurs de puissance (13).

6. Installation suivant l'une des revendications précédentes, caractérisée par le fait que l'épaisseur de paroi est ≤ 2 mm.

7. Installation suivant l'une des revendications précédentes, caractérisée par le fait que les passages (33, 34) sur chaque disque-isolateur (25, 26) présentent une section de passage > à 100 cm².
